# DEMANDE DE BREVET EUROPEEN

(11) **EP 0 686 543 A1**
(43) Date de publication de la demande: **13.12.1995**
(21) Numéro de dépôt: 95401333.0
(22) Date de dépôt: 08.06.1995
(51) Int. Cl.: B62D 25/04

(54) **Structure de maintien d'un pavillon de véhicule assurant une vision améliorée**

(30) Priorité: 08.06.1994 FR 9407029
(71) Demandeur: SOPELEM-SOFRETEC, Société dite:, F-95870 Bezons (FR)
(72) Inventeur: De Ruffi de Ponteves, Dominique, F-75016 Paris (FR); Saint-Sevin, Michel, F-93220 Gagny (FR)
(74) Mandataire: Michelet, Alain

(57) **Abrégé**

La présente invention concerne une structure de maintien d'un pavillon (5) de véhicule (1) comportant des montants latéraux (4) par rapport au conducteur dont la position moyenne du point à égale distance des yeux est M.

Chaque montant (4) est à claire-voie et comporte une structure en treillis constituée d'éléments, lesdits éléments étant approximativement contenus dans des plans passant, chacun, par le point M.

## Description

La présente invention concerne la réalisation des postes de conduite ou de pilotage de véhicules, tels que les automobiles, hélicoptères, avions, etc....

Dans ces véhicules, la vision de face du conducteur est traditionnellement faite au travers d'un pare-brise fixé sur le véhicule lui-même par l'intermédiaire d'une structure de maintien.

Cette structure de maintien qui peut faire partie intégrante de la carrosserie, comporte des montants latéraux.

La vision latérale du conducteur est assurée au travers de glaces latérales venant elles-même au contact des montants latéraux de la structure de maintien du pare-brise du véhicule.

Lorsque le conducteur a besoin d'un champ de vision élargi, il est amené à tourner sa tête pour avoir une vision latérale et, dans une position intermédiaire, son regard rencontre les montants latéraux de la structure de maintien du pavillon et/ou du pare-brise qui obstruent son champ de vision.

Cette limitation présente des risques considérables et, dans certaines conditions, un obstacle, éventuellement en mouvement relatif par rapport au véhicule, peut se trouver dissimulé sur une partie importante de sa trajectoire, c'est-à-dire pendant un temps relativement long, étant masqué par l'un des montants latéraux.

Ainsi, les montants latéraux constituent une limitation au champ de vision du conducteur, appelée dans le langage commun "angle mort".

Les pare-brises des véhicules sont de plus en plus inclinés pour des raisons d'esthétique, mais surtout d'aérodynamisme, ce qui a pour conséquence d'augmenter l'effet de masque des montants, les angles morts devenant de plus en plus importants.

Jusqu'à présent, cette présence d'angle mort était considérée comme une contrainte, un défaut inévitable inhérent à tout véhicule.

Pour remédier à ces défauts, certains véhicules, par exemple des hélicoptères, sont équipés de surfaces ou parois transparentes courbes d'un seul tenant, remplissant à la fois le rôle du pare-brise et des glaces latérales et ne nécessitant la présence d'aucun montant latéral.

Toutefois, cette technique coûteuse ne peut recevoir que des applications limitées, elle n'est pas adaptée, ni à la production à faible coût, ni à des véhicules de grande largeur, ni à la rigidité nécessaire lors de collision ou lors d'un retournement du véhicule.

Le but de l'invention est de proposer une structure de maintien d'un pare-brise de véhicule qui comporte des montants latéraux, mais ne présente pas les limitations du champ visuel mentionnées plus haut.

C'est un autre objectif de l'invention de proposer une structure de maintien d'un pare-brise dont la réalisation soit simple, relativement peu coûteuse et compatible avec les techniques de fabrication actuelles.

A cet effet, l'invention concerne une structure de maintien d'un pavillon de véhicule comportant des montants latéraux par rapport au conducteur dont la position moyenne du point à égale distance des yeux est M.

Selon l'invention, chaque montant comporte une structure à claire-voie en treillis.

Ainsi, la vision, au travers des montants, est possible, la structure ne masquant pas un objet simultanément aux deux yeux de l'utilisateur.

Chaque montant est de préférence constitué d'éléments, lesdits éléments étant approximativement contenus dans des plans passant, chacun, par le point M.

Dans un mode de réalisation préféré, la structure de chaque montant est en treillis constitué d'éléments plats, lesdits éléments étant approximativement contenus dans des plans passant, chacun, par le point M.

Ainsi, chacun des éléments constitutifs du treillis est vu par le conducteur par sa tranche, c'est-à-dire par son épaisseur, sa plus petite dimension, ce qui engendre l'obturation minimum du champ de vision du conducteur, alors que la résistance mécanique procurée par cet élément plat est fonction, non seulement de son épaisseur, mais aussi de sa largeur et de sa longueur, qui ne contribuent en rien à la limitation du champ visuel du conducteur.

Selon différents modes de réalisation éventuellement combinés, les éléments constitutifs de la structure à claire-voie en treillis sont longilignes et associés deux à deux dans un même plan passant par le point M.

Ainsi, vue par le conducteur, la structure à claire-voie est composée d'éléments se superposant visuellement, au moins deux à deux.

Dans une réalisation préférée, la position moyenne du point à égale distance des yeux d'un passager étant M1, des éléments constitutifs de la structure à claire-voie en treillis sont approximativement contenus dans des plans passant par le point M1 et ces éléments sont associés deux à deux dans un même plan. Les montants latéraux sont alors disposés de façon symétrique par rapport à un plan médian vertical. Les principales lignes de structure étant dans ce cas orientées préférentiellement, soit vers M, soit vers M1, dégageant ainsi le champ de vision du conducteur et du passager.

Avantageusement, la structure de maintien comporte un élément réfléchissant formant rétroviseur.

Dans ce cas, de préférence, la structure de maintien comporte des montants arrière dont les éléments constitutifs sont contenus dans des plans contenant l'image du point M par réflexion sur le rétroviseur.

La structure constitutive de chaque montant comporte des flancs latéraux réunis par des faces, respectivement avant et arrière, transparentes.

Les volumes interstitiels délimités par les éléments de la structure à claire-voie sont occupés par un matériau transparent.

Cette réalisation correspond plus particulièrement au cas où deux éléments au moins de la structure sont situés sur la surface extérieure du véhicule, de manière à assurer une continuité entre le pare-brise et les vitres des portières.

Ainsi, les montants constituent des volumes fermés, simples d'utilisation et d'aspect esthétique agréable.

Selon certaines réalisations, le pare-brise lui-même peut constituer l'une des faces, par exemple la face avant.

Les éléments de la structure sont généralement réalisés en acier ou encore en matériau composite.

La structure en treillis comporte avantageusement des éléments formant des longerons s'étendant du haut en bas de la structure et des entretoises réunissant les longerons.

Cette disposition permet d'obtenir une bonne rigidité des montants pour une masse et une utilisation de matière limitées.

Dans une réalisation préférée de l'invention, la structure en treillis comporte au moins trois longerons de forme tubulaire ou pleine, reliés deux à deux par des entretoises.

On obtient une bonne visibilité à travers les montants lorsque les entretoises sont inclinées par rapport à l'horizontale de façon à avoir une direction transverse à la ligne des yeux. De façon avantageuse, les entretoises forment un angle compris entre 20 et 70° vis-à-vis du plan horizontal.

Les entretoises sont orientées approximativement à 45° par rapport aux longerons, alternativement dans un sens et dans l'autre, les couples de deux entretoises successives étant de préférence en contact l'une avec l'autre au niveau de l'un des longerons.

L'invention sera décrite en détail en référence aux dessins annexés dans lesquels :
- la Figure 1 représente une vue schématique en perspective d'un pare-brise et de sa structure de maintien ;
- la Figure 2 est une vue de face partielle d'un pare-brise maintenu par la structure de l'invention dans un premier mode de réalisation ;
- la Figure 3 est une vue de face partielle d'un pare-brise maintenu par la structure de l'invention dans un deuxième mode de réalisation ;
- la Figure 4 est une vue schématique en coupe de dessus d'un pare-brise maintenu par la structure de l'invention ;
- la Figure 5 est une vue schématique en coupe de dessus semblable à la Figure 4, d'un autre mode de réalisation de l'invention ;
- la Figure 6 est une vue schématique en coupe de dessus d'un mode de réalisation de l'invention dans lequel la structure de maintien comporte un élément réfléchissant formant rétroviseur ;
- la Figure 7 est une autre vue en coupe de dessus d'un mode de réalisation de l'invention dans lequel la structure de maintien comporte un élément réfléchissant formant rétroviseur intérieur.

Le véhicule automobile 1 est équipé d'un pare-brise 2 et de glaces latérales 3. La structure de maintien du pare-brise comporte des montants 4, représentés ici solidaires du panneau de toit ou pavillon 5. Un joint 6 est éventuellement interposé entre la structure de maintien et le pare-brise 2.

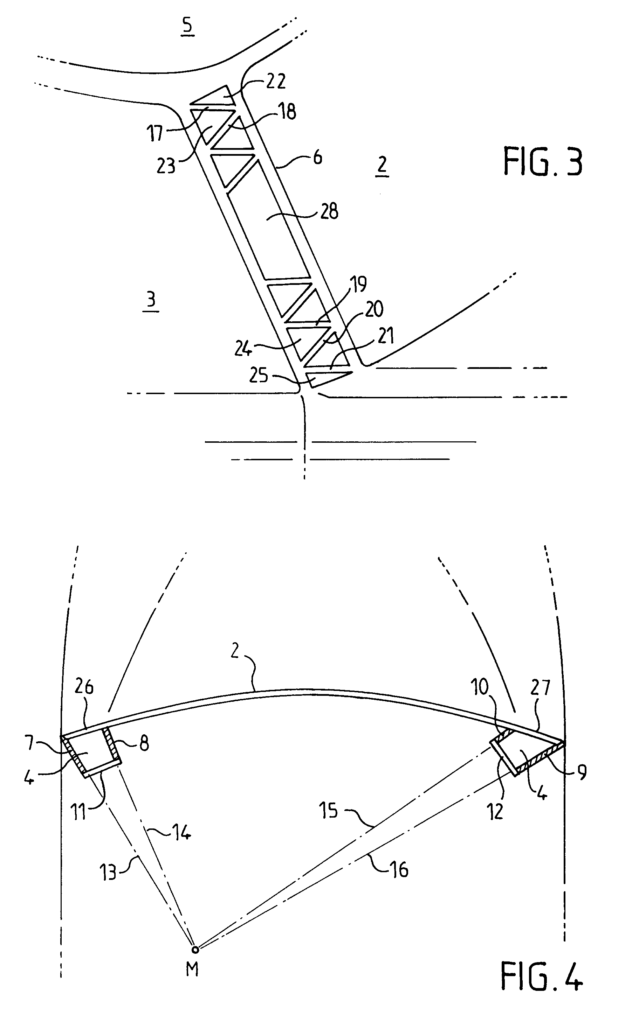

Dans des premiers modes de réalisation, les montants 4 comportent chacun des flancs latéraux 7, 8, 9 et 10 reliés à la face avant, c'est-à-dire à la face la plus proche de l'extérieur du véhicule, par les zones latérales 26 et 27 du pare-brise 2. A l'arrière, ces flancs latéraux sont reliés par des glaces de protection 11, 12. Les flancs latéraux 7, 8, 9 et 10 sont contenus dans des plans schématisés sur la Figure 4 par les lignes en pointillés, respectivement 13, 14, 15, 16, passant par le point M et qui est la position moyenne du point à égale distance des yeux du conducteur.

L'ergonomie de nombreuses machines ou de nombreux véhicules est étudiée et définie par référence à un personnage moyen. Ici, la définition de la structure de maintien du pare-brise et de son aptitude à diminuer la formation d'angle mort, faite par rapport à la position M moyenne du point à égale distance des yeux du conducteur et/ou de la position M1 correspondante pour le passager placé à côté du conducteur. Dans les situations réelles, le conducteur ou son passager pourront se trouver légèrement décalés latéralement, en avant ou en arrière par rapport à ce point, ce qui aura pour effet que les conditions théoriques idéales, telles qu'exposées et présentées sur les Figures, ne seront pas parfaitement satisfaites. Cet effet sera minimum dans le cas où la forme des montants sera déterminée de façon à être situés sur une ligne parallèle à la ligne de position de l'oeil moyen, déterminée en fonction de la taille du conducteur ou du passager.

Par approximation, on a considéré ici que les montants du pare-brise sont verticaux. On comprend que, en fonction de la forme du véhicule, les montants dans leur ensemble ou les flancs qualifiés de verticaux pourront avoir une forme courbe.

Dans un tel cas, les flancs latéraux sont constitués par des surfaces réglées dont les génératrices passent par le point M. On obtient ainsi le résultat recherché et obtenu par la configuration définie plus haut, à savoir que ces flancs latéraux sont vus par leur tranche et constituent donc un obstacle minime pour le conducteur.

L'écart interpupillaire moyen est de 64 mm, ce qui est nettement plus important que l'épaisseur des montants ou entretoises utilisés dans l'invention.

Il en résulte que la partie de paysage qui sera cachée pour l'un des deux yeux du conducteur sera vue par l'autre oeil, sauf une toute petite zone située immédiatement derrière les montants.

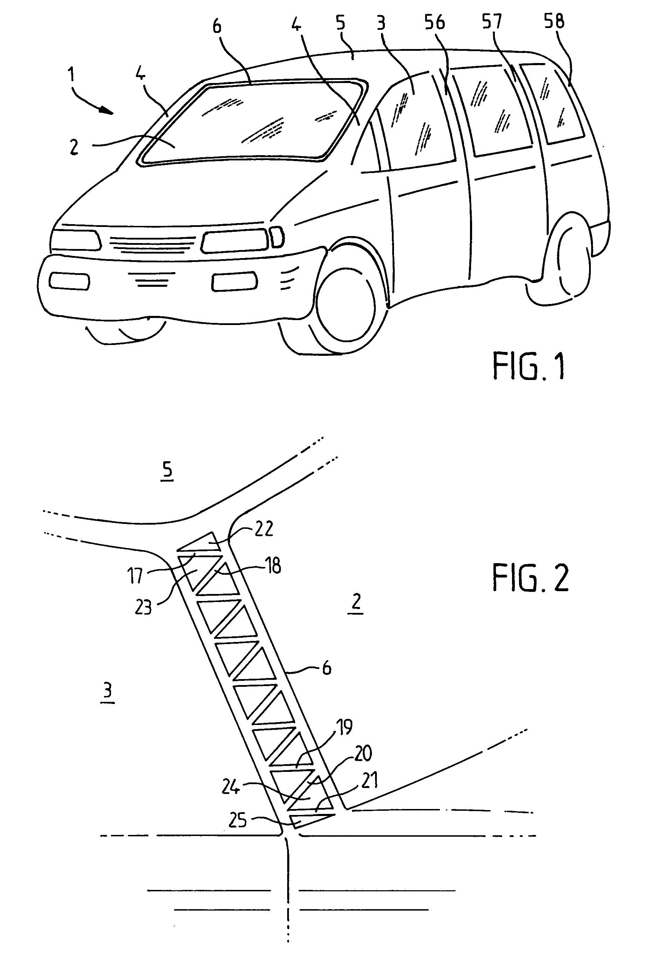

Les flancs latéraux 7, 8, 9, 10 sont avantageusement reliés par des entretoises 17 à 21 constituant également des éléments plats placés dans des plans contenant le point M. Ces entretoises 17 à 21 améliorent la rigidité des montants et tout comme les flancs latéraux, ne constituent que des limitations minimes au champ de vision du conducteur. Ces entretoises 17 à 21 peuvent être régulièrement réparties de haut en bas, tel que représenté sur la Figure 2, elles peuvent aussi avantageusement être placées uniquement en partie haute et basse des montants, de manière à laisser un espace libre 28 entre les montants latéraux, approximativement à hauteur du point M (Figure 3).

Les entretoises 17 à 21 forment un angle d'environ 45° avec les flancs latéraux et les entretoises successives sont avantageusement en contact l'une avec l'autre au niveau de l'un des montants.

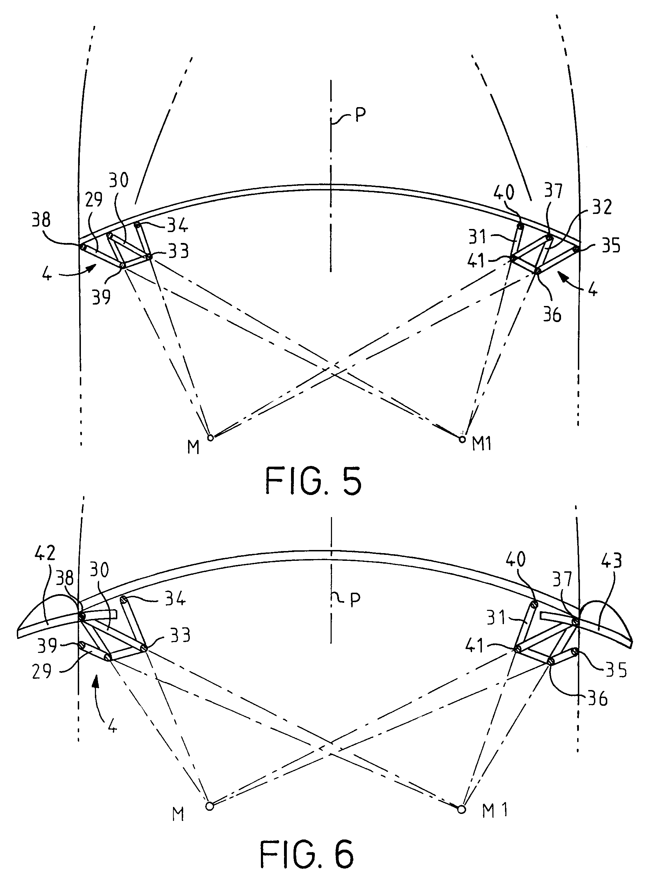

D'autres modes de réalisation, représentés plus particulièrement à la Figure 5, permettent une disposition symétrique des deux montants 4 par rapport à un plan médian P vertical.

Dans cette réalisation, la structure des montants 4 est constituée essentiellement d'un treillis, composé d'éléments longilignes 29, 30, 31, 32, 33, 34, 35, 36, 37, 38, 39, 40, 41 formant longerons ou poutres, formant une structure triangulée. Ces éléments longilignes peuvent être, pris dans leur section, de formes variées. Les dimensions de leur section étant faible par rapport à leur longueur.

La position moyenne du point à égale distance des yeux d'un passager, soit le point central, étant M1, les éléments constitutifs de la structure à claire-voie en treillis sont deux à deux approximativement contenus dans des plans passant par le point M et/ou par le point M1. De cette façon, les éléments de la structure sont orientés préférentiellement en direction de l'axe de vision du conducteur ou de celui du passager.

Ainsi, les éléments constitutifs de la structure sont vus par le conducteur et par le passager, soit de façon superposée deux à deux, soit par leur tranche, c'est-à-dire leur plus petite dimension, ce qui engendre une obturation minimale des champs de vision.

D'autre part, la structure en treillis assure en elle-même une bonne rigidité mécanique de l'ensemble.

La vision du conducteur au travers des montants à claire-voie ainsi réalisés ne sera généralement pas aussi claire et confortable que la vision directe au travers du pare-brise ou des vitres latérales. Toutefois, elle est suffisante pour qu'un obstacle qui aurait été totalement ou partiellement masqué par un montant traditionnel opaque soit perçu et attire l'attention du conducteur.

Un angle de vision ouvert est en particulier nécessaire pour l'observation de la circulation, lors de l'entrée d'un véhicule automobile sur un rond-point. Dans une telle situation, il faut d'ailleurs souligner que le conducteur du continent européen, habitué à respecter la priorité à droite et observant donc de manière privilégiée vers la droite, doit au contraire donner la priorité au véhicule déjà présent sur le rond-point et qui, compte tenu du sens de rotation, vient de sa gauche. Or, tel que cela apparaît clairement sur la Figure 4, on constate que la limitation du champ visuel impliquée par les montants est plus importante lors de la vision vers la gauche, puisque le conducteur situé à gauche du véhicule est plus près du montant gauche que du montant droit. L'intérêt de l'invention, qui contribue de manière générale à la sécurité, est donc particulièrement perçu dans cette situation.

La rigidité des montants est l'une de leurs propriétés importantes puisque, solidarisant le pavillon à la partie basse de la caisse, il contribue à la rigidité d'ensemble de l'habitacle et, par là, à la sécurité du véhicule et des passagers qu'il transporte. La structure de maintien de l'invention permet la mise en oeuvre de montants rigides aptes à supporter des efforts importants.

Cette structure de maintien d'un pare-brise peut incorporer tout ou partie d'un rétroviseur 42, 43. La forme et la disposition de celui-ci sont optimisées en fonction de la forme du véhicule. Le rétroviseur 42, 43 ainsi disposé s'étend vers l'intérieur du véhicule, ce qui permet de limiter l'angle mort non-observable.

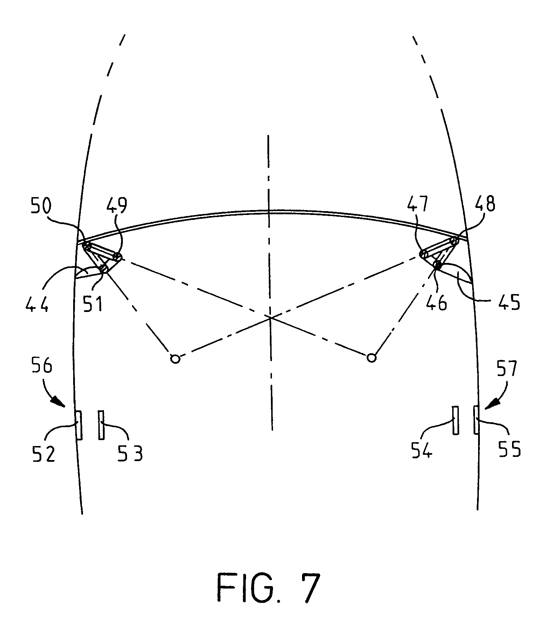

Dans le mode de réalisation représenté à la Figure 7, les montants 4 avant du véhicule comportent chacun une structure à claire-voie en treillis comportant trois barres 46, 47, 48 et 50, 51, 52 formant longerons, disposées de bas en haut suivant une direction inclinée. Ces longerons sont associés deux à deux sur une même surface réglée constituée de droites passant, soit par le point M, soit par le point M1.

De façon à permettre une bonne visibilité au travers de la structure à claire-voie, tout en assurant sa rigidité, des entretoises relient deux à deux les barres 46 à 52 formant longerons. Ces entretoises sont inclinées par rapport à l'horizontale.

L'épaisseur des longerons 46 à 52 est nettement inférieure à l'écart pupillaire et la distance séparant les deux barres visibles, à partir du point M et/ou du point M1, est supérieure à ce même écart pupillaire.

La position des points M et M1 dépend, en pratique, de la taille et de la morphologie du conducteur et de son passager.

Avantageusement, les barres inclinées 46 à 51 formant longerons sont disposées sur une courbe sensiblement parallèle à la courbe de la position de l'oeil moyen M, M1 du conducteur ou du passage, en fonction de la taille de ces derniers.

Bien que la description ait jusqu'à présent été principalement faite en référence au pare-brise, elle s'étend à l'utilisation d'une structure en treillis, en général, pour le maintien d'un pavillon d'automobile.

Dans le mode de réalisation représenté à la Figure 7, des éléments réfléchissants 44, 45 formant rétroviseurs sont aménagés sur les montants 4. Les montants latéraux 56, 57, 58 situés derrière le conducteur et le passager avant comprennent alors également une structure à claire-voie, formée de deux éléments plats 52, 53 et 54, 55 reliés par des entretoises. Les deux rétroviseurs intégrés aux montants 4 permettent ainsi au conducteur une vision latérale, au travers des montants arrière, et remplacent donc avantageusement les rétroviseurs extérieurs classiques.

Cette disposition améliore l'aérodynamisme du véhicule, évite les salissures du rétroviseur et contribue à l'esthétique du véhicule.

Les montants de l'invention permettent également des réalisations variés et autorisent la recherche d'effets esthétiques nombreux.

## Revendications

1. Structure de maintien d'un pavillon (5) de véhicule (1) comportant des montants latéraux (4) par rapport au conducteur dont la position moyenne du point à égale distance des yeux est M,
caractérisée en ce que chaque montant (4) comporte une structure à claire-voie en treillis.

2. Structure de maintien selon la revendication 1, caractérisée en ce que chaque montant est constitué d'éléments, lesdits éléments étant approximativement contenus dans des plans passant, chacun, par le point M.

3. Structure de maintien selon la revendication 2, caractérisée en ce que les éléments constitutifs de la structure à claire-voie en treillis sont plats.

4. Structure de maintien selon la revendication 2, caractérisée en ce que les éléments constitutifs de la structure à claire-voie en treillis sont longilignes et associés deux à deux dans un même plan passant par le point M.

5. Structure de maintien selon la revendication 4, caractérisée en ce que les montants latéraux (4) sont symétriques l'un de l'autre par rapport à un plan médian (P) vertical du véhicule.

6. Structure de maintien selon l'une des revendications 1 à 5, caractérisée en ce qu'elle comporte un élément réfléchissant formant rétroviseur.

7. Structure de maintien selon la revendication 6, caractérisée en ce qu'elle comporte des montants arrière (56, 57, 58) dont les éléments constitutifs (52, 53, 54, 55) sont contenus dans des plans contenant l'image du point M par réflexion sur le rétroviseur.

8. Structure de maintien selon l'une quelconque des revendications 1 à 7, caractérisée en ce que la structure en treillis comporte des longerons s'étendant du haut au bas de la structure et des entretoises réunissant les longerons.

9. Structure de maintien selon la revendication 8, caractérisée en ce que les entretoises (17 à 21) sont placées en haut et en bas des montants et un espace (28) situé entre les longerons (7, 8, 9, 10) est laissé libre autour d'un point situé, approximativement à la hauteur du point M.

10. Structure de maintien selon l'une quelconque des revendications 8 et 9, caractérisée en ce que les entretoises (17 à 21) sont orientées approximativement à 45° par rapport aux longerons, alternativement dans un sens et dans l'autre.

11. Structure de maintien selon l'une des revendications 8 à 10, caractérisée en ce que des couples de deux entretoises successives sont en contact l'une avec l'autre au niveau de l'un des longerons.

12. Structure de maintien selon l'une des revendications 1 à 11, caractérisée en ce que des éléments de la structure à claire-voie sont en un matériau composite.
